# EUROPEAN PATENT SPECIFICATION

(11) **EP 0 965 180 B1**
(45) Date of publication and mention of the grant of the patent: **05.11.2003**
(21) Application number: 96923522.5
(22) Date of filing: 27.06.1996
(51) Int. Cl.: H04B 3/54, H04B 3/56, G08C 23/04, G08C 19/28

(54) **REMOTE CONTROL APPARATUS FOR POWER LINE COMMUNICATIONS SYSTEM**
FERNSTEUEREINRICHTUNG FÜR EIN NETZLEITUNGSÜBERTRAGUNGSSYSTEM
APPAREIL DE COMMANDE A DISTANCE POUR SYSTEME DE COMMUNICATIONS PAR LIGNE ELECTRIQUE

(43) Date of publication of application: 22.12.1999
(73) Proprietor: PHONEX CORPORATION, Midvale, UT 84047-3756 (US)
(72) Inventor: PATEL, Chandrakant, Bhailalbhai, Hopewell, NJ 08525-3114 (US); ADER, Joseph, Robert, Yardley, PA 19067 (US); KLEIN, Henry, Charles, West Chester, PA 19382 (US); ARTMAN, John, Berwyn, PA 19312 (US)
(74) Representative: Ricker, Mathias, Dr.Dipl.-Chem.
(86) International application number: US9611056
(87) International publication number: WO97050192

(56) References cited:
- US-A- 3 852 722
- US-A- 4 200 862
- US-A- 4 980 665
- US-A- 5 214 422

## Description

### TECHNICAL FIELD

The present invention relates, in general, to the communication of information along power lines and, in particular, to the remote control of utilization equipment connected to a power line.

### BACKGROUND OF THE INVENTION

The lines by which power is distributed in a building can be and are used for the transmission of information signals between rooms within a building. For example, cable television signals delivered to a building can be transmitted to a plurality of television sets in the building by the power lines in the building from a single cable control box positioned at a convenient location such as the cable input point.

Typically, a television set is operated by a remote controller which transmits coded infrared signals which are sensed by an infrared sensor on the television set to change a setting (e.g. the channel to be viewed) of the television set. With cable television service and operation of the television set by means of a cable control box, the cable control box typically is positioned in proximity to the television set and the cable control box is operated by a remote controller of generally similar design to a remote controller for a television set. If the cable control box is located remote from the television set and out of the range of the remote controller, as for example when a single cable control box is used as the signal source for a plurality of television sets which receive the signals via the power lines in a building, means must be provided to change the setting of the cable control box to permit operation of the remote controller without the need to go to the cable control box and be within the range of the remote controller.

### SUMMARY OF THE INVENTION

According to the present invention, remote control apparatus for a power line communication system includes a power line and a control unit for transmitting a first code modulated control signal. This apparatus also includes a first transmitter/receiver and a second transmitter/receiver. The first transmitter/receiver includes means for sensing the first code modulated control signal, means for demodulating the first code modulated control signal to develop a first code control signal, means for modulating a first carrier signal with the first code control signal to develop a second code modulated control signal, and means for coupling the second code modulated control signal from the first transmitter/receiver to the power line for transmission of the second code modulated control signal along the power line. The second transmitter/receiver includes means for coupling the second code modulated control signal from the power line to the second transmitter/receiver, means for demodulating the second code modulated control signal to develop a second code control signal which is substantially identical to the first code control signal, means for modulating a second carrier signal with the second code control signal to develop a third code modulated control signal, and means for transmitting the third code modulated control signal. Remote control apparatus for a power line communication system, constructed in accordance with the present invention, further includes means for sensing the third code modulated control signal.

While the present invention will be described in connection with the remote control of a television cable control box, remote control apparatus for a power line communications system, constructed in accordance with the present invention, has broader application and can be used to control other types of utilization equipment.

### BRIEF DESCRIPTION OF THE DRAWINGS

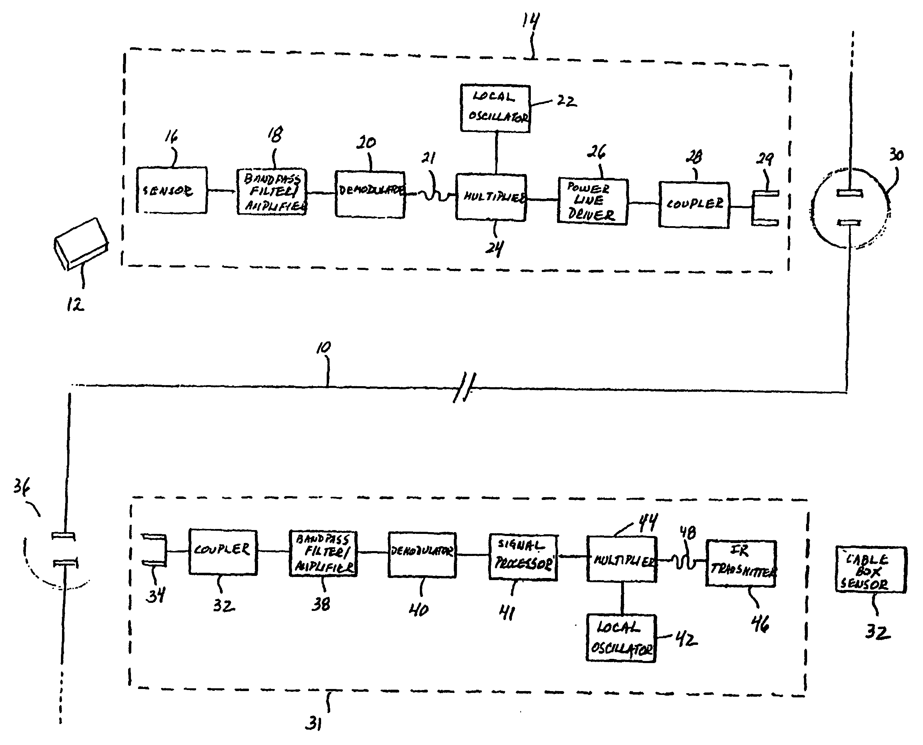

The single figure is a block diagram of remote control apparatus for a power line communications system constructed in accordance with the present invention.

### DETAILED DESCRIPTION OF THE INVENTION

Referring to the drawing, remote control apparatus for a power line communication system, constructed in accordance with the present invention, includes a power line **10** and a control unit **12** for transmitting a first code modulated control signal. Control unit **12** can be a conventional remote controller for a television set or a cable television control box which transmits a pulse code modulated infrared signal. Such signals generally have 0.5 ms wide pulses with a maximum repetition rate of 1 ms. A wide range of encoding schemes are used by various manufacturers to encode volume control, channel selection, and other operating functions and settings of the equipment. These schemes typically encode 8 to 32 bits of digital information with most using some form of redundancy to ensure reception in the event of an interrupted transmission. The baseband pulse code modulated signal, referred to herein as the first pulse code control signal, is then used to modulate a carrier and the resultant signal, referred to herein as the first pulse code modulated control signal, is transmitted through the air using an infrared diode. The carrier frequency of a broad variety of commercially available infrared remote controllers is in the 32 KHz to 56 KHz range, with most manufacturers using a carrier within the 38 KHz to 40 KHz range or about 38 KHz..

The remote control apparatus shown in the drawing also includes a first transmitter/receiver **14** by which the information in the first pulse code modulated control signal transmitted by control unit **12** is conducted to power line **10**. In particular, it is necessary to shift the carrier frequency so that the carrier frequency is in a frequency range which permits transmission along power line **10** yet below the 40 MHz upper limit of operation of power line communications systems set by the government.

Transmitter/receiver **14** has a sensor **16** for sensing the first pulse code modulated control signal transmitted by control unit **12**. For infrared signals transmitted by controller **12**, sensor **16** is an infrared phototransistor. Generally, commercially available infrared receivers, by which electronic equipment is controlled by a remote controller, respond to carrier frequencies over the entire range of 32 KHz to 56 KHz. Thus, if transmitter/receiver **14** is designed to receive a selected baseband signal modulated on, for example, a 38 KHz carrier, transmitter/receiver **14** will respond properly even if the actual carrier frequency is not 38 KHz.

Transmitter/receiver **14,** shown in the drawing, also has a bandpass filter/amplifier **18** for bandpass filtering the first pulse code modulated control signal to assure passage of only this signal and for amplifying this signal to a sufficient level.

Transmitter/receiver **14** also has a demodulator **20** for demodulating the first pulse code modulated control signal sensed by sensor **16** to develop a first code control signal. Demodulator **20** serves to detect the first pulse code control signal (i.e. the baseband pulse code modulated signal) from its carrier signal.

Sensor **16**, bandpass filter amplifier **18**, and demodulator **20** can be arranged as a unit which is positioned in proximity to a television set. Curved line **21**, extending from the output of demodulator **20**, represents a cable by which the demodulator is connected to the remainder of transmitter/receiver **14** which is arranged for positioning at an outlet connected to power line **10** and to be plugged into this outlet.

Transmitter/receiver **14** further has a local oscillator **22** and a multiplier **24** for modulating a first carrier signal supplied by local oscillator **22** with the first pulse code control signal (i.e. the baseband pulse code modulated signal) to develop a second pulse code modulated control signal. This second pulse code modulated control signal has a carrier frequency in a frequency range which permits transmission along power line **10** yet below the 40 MHz upper limit of operation of power line communications systems set by the government.

Transmitter/receiver **14,** shown in the drawing, also has a power line driver **26** which amplifies and bandpass filters the second pulse code modulated control signal.

Transmitter/receiver **14** also has a coupler **28** for coupling the second pulse code modulated control signal from transmitter/receiver **14** to power line **10** by way of a plug **29** and an outlet **30**, connected to the power line, for transmission of the second pulse code modulated control signal along the power line. Coupler **28** provides isolation, impedance matching and filtering.

The remote control apparatus shown in the drawing also includes a second transmitter/receiver **31** by which the information in the second pulse code modulated control signal transmitted along power line **10** is transmitted to a cable television box sensor **32**. In particular, it is necessary to shift the carrier frequency of the second pulse code modulated control signal so that the carrier frequency of the signals transmitted to cable television box sensor **32** are in a range which permits their reception and processing by the cable television box sensor.

Transmitter/receiver **31** has a coupler **33** for coupling the second pulse code modulated control signal from power line **10** to transmitter/receiver **32** by way of a plug **34** and an outlet **36** connected to the power line. Coupler **33** provides isolation, impedance matching and filtering.

Transmitter/receiver **31**, shown in the drawing, also has a bandpass filter/amplifier **38** for assuring passage of only the second pulse code modulated control signal and for amplifying this signal to a sufficient level.

Transmitter/receiver **31** also has a demodulator **40** for demodulating the second pulse code modulated control signal to develop a second code control signal which is substantially identical to the first code control signal. Demodulator **40** serves to detect the second pulse code control signal (i.e. the baseband pulse code modulated signal) from its carrier signal.

Transmitter/receiver **31,** shown in the drawing, also has a signal processor **41** which sharpens the pulses in the second pulse code control signal (i.e. the baseband pulse code modulated signal).

Transmitter/receiver **31** further has a local oscillator **42** and a multiplier **44** for modulating a second carrier signal supplied by local oscillator **42** with the second pulse code control signal (i.e. the baseband pulse code modulated signal) to develop a third pulse code modulated control signal. This third pulse code modulated control signal has a carrier frequency (e.g. 38 KHz) in a range (e.g. 32 KHz to 56 KHz) which permits its reception and processing by cable television box sensor **32**.

Transmitter/receiver **31** also has an infrared transmitter **46** for transmitting a third pulse code modulated infrared control signal through the air. Cable television box sensor **32**, in proximity to infrared transmitter **46**, senses and processes the third pulse code modulated infrared control signal transmitted by infrared transmitter **46** in the usual manner and changes the setting (e.g. channel to be viewed) in response to the pulse code control signal. Curved line **48**, extending between multiplier **44** and infrared transmitter **46**, represents a cable by which the infrared transmitter, located in proximity to cable television box sensor **32**, is connected to the remainder of transmitter/receiver **31** which is arranged for positioning at outlet **36** and to be plugged into this outlet.

## Claims

1. A remote control apparatus for a power line communication system comprising:
a power line (10);
a control unit (12) for transmitting a first pulse code modulated control signal;
a first transmitter/receiver (14) including:
(1) means (16) for sensing said first pulse code modulated control signal,
(2) means (20) for demodulating said first code modulated control signal to develop a first pulse code control signal,
(3) means (22, 24, 26) for pulse code modulating a first carrier signal with said first pulse code control signal to develop a second pulse code modulated control signal, and
(4) means (28, 29, 30) for coupling said second pulse code modulated control signal from said first transmitter/receiver (14) to said power line (10) for transmission of said second pulse code modulated control signal along said power line (10);
a second transmitter/receiver (31) including:
(1) means (33, 34, 36) for coupling said second pulse code modulated control signal from said power line (10) to said second transmitter/receiver (31),
(2) means for pulse code demodulating (40) said second pulse code modulated control signal to develop a second pulse code control signal substantially identical to said first pulse code control signal,
(3) means (42, 44) for modulating a second carrier signal with said second pulse code control signal to develop a third pulse code modulated control signal, and
(4) means (46) for transmitting said third pulse code modulated control signal; and
means (32) for sensing said third pulse code modulated control signal.

2. A remote control apparatus according to claim 1 wherein;
(a) said control unit (12) is an infrared signal transmitter which transmits a first pulse code modulated infrared control signal as said first pulse code modulated control signal,
(b) said first transmitter/receiver sensing means includes an infrared sensor (16),
(c) said second transmitter/receiver transmitting means includes an infrared signal transmitter (46) which transmits a second pulse code modulated infrared control signal as said third pulse code modulated control signal, and
(d) said means for sensing said third pulse code modulated control signal includes an infrared sensor (32).

3. A remote control apparatus according to claim 2 wherein said first pulse code modulated control signal and said second pulse code modulated control signal each includes a carrier frequency in the 32 kHz to 56 kHz range modulated by a pulse code.

4. A remote control apparatus according to claim 3 wherein said carrier frequency of said first pulse code modulated control signal and said second pulse code modulated control signal is 38 kHz.

5. A remote control apparatus according to claim 2 wherein:
(a) said first transmitter/receiver (14) further includes:
(1) means (18) for bandpass filtering and amplifying said first pulse code modulated control signal, and
(2) means for amplifying and bandpass filtering said second pulse code modulated control signal, and
(b) said second transmitter/receiver (31) further includes:
(1) means (38) for bandpass filtering and amplifying said second pulse code modulated control signal, and
(2) means (41) for sharpening the pulses in said second pulse code control signal.

## Patentansprüche

1. Fernsteuereinrichtung für ein Netzleitungsübertragungssystem aufweisend:
eine Netzleitung (10);
eine Steuereinheit (12) zum Übertragen eines ersten Pulscode-modulierten Steuersignals;
einen ersten Sender/Empfänger (14) umfassend:
(1) Mittel (16) zum Erfassen des ersten Pulscode-modulierten Steuersignals,
(2) Mittel (20) zum Demodulieren des ersten Code-modulierten Steuersignals, um ein erstes Pulscode-Steuersignal zu entwickeln,
(3) Mittel (22, 24, 26) zum Pulscode-Modulieren eines ersten Trägersignals mit dem ersten Pulscode-Steuersignal, um ein zweites Pulscode-moduliertes Steuersignal zu entwickeln, und
(4) Mittel (28, 29, 30) zum Koppeln des zweiten Pulscode-modulierten Steuersignals von dem ersten Sender/Empfänger (14) zu der Netzleitung (10) für eine Übertragung des zweiten Pulscode-modulierten Steuersignals entlang der Netzleitung (10);
einen zweiten Sender/Empfänger (31) umfassend:
(1) Mittel (33, 34, 36) zum Koppeln des zweiten Pulscode-modulierten Steuersignals von der Netzleitung (10) zu dem zweiten Sender/Empfänger (31),
(2) Mittel (40) zum Pulscode-Demodulieren des zweiten Pulscode-modulierten Steuersignals, um ein zweites Pulscode-Steuersignal zu entwickeln, welches im Wesentlichen identisch zu dem ersten Pulscode-Steuersignal ist,
(3) Mittel (42, 44) zum Modulieren eines zweiten Trägersignals mit dem zweiten Pulscode-Steuersignal, um ein drittes Pulscode-moduliertes Steuersignal zu entwickeln, und
(4) Mittel (46) zum Übertragen des dritten Pulscode-modulierten Steuersignals; und
Mittel (32) zum Erfassen des dritten Pulscode-modulierten Steuersignals.

2. Fernsteuereinrichtung nach Anspruch 1, bei welcher
(a) die Steuereinheit (12) ein Infrarotsignal-Sender ist, welcher ein erstes Pulscode-moduliertes Infrarot-Steuersignal als das Pulscode-modulierte Steuersignal übermittelt,
(b) das erste Sender/Empfänger-Erfassungsmittel den Infrarotsensor (16) umfasst,
(c) das zweite Sender/Empfänger-Übertragungsmittel einen Infrarotsignal-Sender (46) umfasst, welcher ein zweites Pulscode-moduliertes Infrarot-Steuersignal als das dritte Pulscode-modulierte Steuersignal übermittelt, und
(d) das Mittel zum Erfassen des dritten Pulscode-modulierten Steuersignals einen Infrarotsensor (32) umfasst.

3. Fernsteuereinrichtung nach Anspruch 2, bei welcher das erste Pulscode-modulierte Steuersignal und das zweite Pulscode-modulierte Steuersignal jeweils eine Trägerfrequenz in dem Bereich von 32 kHz bis 56 kHz, moduliert durch einen Pulscode, umfassen.

4. Fernsteuereinrichtung nach Anspruch 3, bei welcher die Trägerfrequenz des ersten Pulscode-modulierten Steuersignals und des zweiten Pulscode-Steuersignals 38 kHz beträgt.

5. Fernsteuereinrichtung nach Anspruch 2, bei welcher:
(a) der erste Sender/Empfänger (14) des Weiteren umfasst:
(1) Mittel (18) zum Filtern mit einem Bandpassfilter und Verstärken des ersten Pulscode-modulierten Steuersignals, und
(2) Mittel zum Verstärken und zum Filtern mit einem Bandpassfilter des zweiten Pulscode-modulierten Steuersignals, und
(b) der zweite Sender/Empfänger (31) des Weiteren umfasst:
(1) Mittel (38) zum Filtern mit einem Bandpassfilter und zum Verstärken des zweiten Pulscode-modulierten Steuersignals, und
(2) Mittel (41) zum Schärfen der Pulse in dem zweiten Pulscode-Steuersignal.

## Revendications

1. Un dispositif de télécommande pour un système de communication sur ligne d'alimentation comprenant :
- une ligne d'alimentation (10) ;
- une unité de commande (12) pour émettre un premier signal de commande modulé par codage d'impulsions ;
- un premier émetteur/récepteur (14) comprenant :
1) des moyens (16) pour détecter ledit premier signal de commande modulé par codage d'impulsions,
2) des moyens (20) pour démoduler ledit premier signal de commande modulé par codage d'impulsions pour développer un premier signal de commande de code d'impulsions,
3) des moyens (22, 24, 26) pour moduler en codage d'impulsions un premier signal de porteuse avec ledit premier signal de commande de code d'impulsions pour développer un second signal de commande modulé par codage d'impulsions, et
4) des moyens (28, 29, 30) pour coupler ledit second signal de commande modulé par codage d'impulsions depuis ledit premier émetteur/ récepteur (14) vers ladite ligne d'alimentation (10) pour transmission dudit second signal de commande modulé par codage d'impulsions le long de ladite ligne d'alimentation (10) ;
- un second émetteur/récepteur (31) comprenant :
1) des moyens (33, 34, 36) pour coupler ledit second signal de commande modulé par codage d'impulsions depuis ladite ligne d'alimentation (10) vers ledit second émetteur/ récepteur (31) ;
2) des moyens pour démoduler en codage d'impulsions (40) ledit second signal de commande modulé par codage d'impulsions pour développer un second signal de commande de code d'impulsions substantiellement identique audit premier signal de commande de code d'impulsions,
3) des moyens (42, 44) pour moduler un second signal de porteuse avec ledit second signal de commande de code d'impulsions pour développer un troisième signal de commande modulé par codage d'impulsions, et
4) des moyens (46) pour émettre ledit troisième signal de commande modulé par codage d'impulsions; et
- des moyens (32) pour détecter ledit troisième signal de commande modulé par codage d'impulsions.

2. Un dispositif de télécommande selon la revendication 1, dans lequel :
a) ladite unité de commande (12) est un émetteur de signal infrarouge qui émet un premier signal de commande infrarouge modulé par codage d'impulsions en tant que premier,
b) lesdits moyens de détection du premier émetteur/récepteur (14) comprennent un capteur infrarouge (16),
c) lesdits moyens émetteurs du second émetteur/récepteur comprennent un émetteur de signal infrarouge (46) qui émet un second signal de commande infrarouge modulé par codage d'impulsions en tant que troisième signal de commande modulé par codage d'impulsions, et
d) lesdits moyens pour détecter ledit troisième signal de commande modulé par codage d'impulsions comprennent un capteur infrarouge (32).

3. Un dispositif de télécommande selon la revendication 2, dans lequel ledit premier signal de commande modulé par codage d'impulsions et ledit second signal de commande modulé par codage d'impulsions incluent chacun une fréquence porteuse dans la plage 32 kHz à 56 kHz modulée par un code d'impulsions.

4. Un dispositif de télécommande selon la revendication 3, dans lequel ladite fréquence porteuse dudit premier signal de commande modulé par codage d'impulsions et dudit second signal de commande modulé par codage d'impulsions est de 38 kHz.

5. Un dispositif de télécommande selon la revendication 2, dans lequel :
a) ledit premier émetteur/récepteur (14) comprend en outre :
1) des moyens (18) de filtrage passe-bande et d'amplification dudit premier signal de commande modulé par codage d'impulsions,
2) des moyens d'amplification et de filtrage passe-bande dudit second signal de commande modulé par codage d'impulsions, et
b) ledit second émetteur/récepteur (31) comprend en outre :
1) des moyens (38) de filtrage passe-bande et d'amplification dudit second signal de commande modulé par codage d'impulsions, et
2) des moyens (41) pour affiner les impulsions dudit second signal de commande de code d'impulsions.
